# EUROPEAN PATENT APPLICATION

(11) **EP 4 068 209 A1**
(43) Date of publication of application: **05.10.2022**
(21) Application number: 20893727.6
(22) Date of filing: 11.11.2020
(51) Int. Cl.: G06T 7/55, G06T 5/50

(54) **MULTI-DEPTH IMAGE GENERATING METHOD AND RECORDING MEDIUM ON WHICH PROGRAM THEREFOR IS RECORDED**

(30) Priority: 28.11.2019 KR 20190155335
(71) Applicant: PJ Factory Co., Ltd., Seoul 05116 (KR)
(72) Inventor: PARK, Jung Hwan, Seoul 03337 (KR)
(74) Representative: Morrall, Jonathan Ian McLachlan
(86) International application number: PCT/KR2020/015726
(87) International publication number: WO 2021/107458

(57) **Abstract**

The present disclosure in at least one embodiment provides a computer-readable medium. The computer-readable medium has stored thereon a program for generating a multi-depth image in which one or more objects are inserted in a tree structure in a main image through cooperation between electronic devices, the program, when executed, performs the functions including sharing a target image among the electronic devices; when information on a request for inserting another object into a target object is inputted from one or more of the electronic devices, updating the target image to make the request displayed on the target object; and when a response object corresponding to the request is inputted from one or more of the electronic devices, generating the multi-depth image by inserting the response object at a position where the request is displayed on the target object; wherein the target object is the target image or an object inserted in a tree structure in the target image. Representative drawing: FIG. 2

## Description

### [Technical Field]

The present disclosure in some embodiments relates to a method of generating a multi-depth image. More particularly, the present disclosure relates to a method of generating a multi-depth image through cooperation between electronic devices.

### [Background]

The statements in this section merely provide background information related to the present disclosure and do not necessarily constitute prior art.

A multi-depth image refers to an image composed of the main image and one or more objects inserted at a lower depth in a tree structure in the main image.

Composed of different information items (objects) converged into a single image formation, the multi-depth image can function as a more simplified new information transfer medium. Accordingly, the multi-depth image may be used to more simply and conveniently convey information.

A method considered to be representative for generating a multi-depth image targets exclusively at images or objects stored in a particular electronic device (an electronic device for which a multi-depth image is to be generated). For example, the representative method may use only objects stored in a particular electronic device to generate a multi-depth image. Therefore, when a user of a particular electronic device wants to insert a new object yet to be stored in the particular electronic device, the user needs to go in person to a place where to obtain the new object.

As a result, according to the representative method of generating a multi-depth image, the range of objects that can be inserted into a lower depth is limited to objects that are already in the user's possession, and the user is supposed to go the distance to secure a new object. This tells that the representative method can be implemented only within a limited range for generating a multi-depth image and is subject to temporal and spatial constraints.

### [Disclosure]

### [Technical Problem]

The present disclosure in some embodiments seeks to provide a method of securing a more diverse and wider range of objects through cooperation between electronic devices, as well as overcoming temporal and spatial constraints on securing objects.

### [Summary]

At least one aspect of the present disclosure provides a computer-readable medium having stored thereon a program for generating a multi-depth image in which one or more objects are inserted in a tree structure in a main image through cooperation between electronic devices, the program, when executed, performs the functions including sharing a target image among the electronic devices; when information on a request for inserting another object into a target object is inputted from one or more of the electronic devices, updating the target image to make the request displayed on the target object; and when a response object corresponding to the request is inputted from one or more of the electronic devices, generating the multi-depth image by inserting the response object at a position where the request is displayed on the target object, Here, the target object is the target image or an object inserted in a tree structure in the target image.

Another aspect of the present disclosure provides A method of generating a multi-depth image in which one or more objects are inserted in a tree structure in a main image through cooperation between electronic devices. The method includes when a request for inserting another object into a target object is inputted, updating a target image to make the request displayed on the target object; transmitting, to one or more response devices, request information including the target object and a position where the request is displayed on the target object; and when a response object corresponding to the request is inputted from the response devices, generating the multi-depth image by inserting the response object at a position where the request is displayed on the target object. Here, the target object is the target image or an object inserted in a tree structure in the target image.

### [Advantageous Effects]

As described above, the present disclosure according to at least one embodiment can utilize not only objects stored in a particular electronic device, but also objects obtained through other electronic devices, thereby generating various multi-depth images that further meet the needs of users.

According to another embodiment, the present disclosure can secure objects through another electronic device at another place and thereby overcome the temporal and spatial constraints on securing the objects.

### [Brief Description of the Drawings]

FIG. 1 is a diagram for describing a relationship between electronic devices for generating multi-depth images.
FIG. 2 is a flowchart for explaining the functions of a multi-depth image generation program.
FIG. 3 is a flowchart for explaining at least one embodiment of processing a multi-request.
FIGS. 4 to 6 are diagrams for explaining at least one embodiment of processing a multi-request.
FIGS. 7 to 9 are flowcharts for explaining various embodiments of generating a multi-depth image.

### [Detailed Description]

Hereinafter, some embodiments of the present disclosure will be described in detail with reference to the accompanying illustrative drawings. In the following description, like reference numerals preferably designate like elements, although the elements are shown in different drawings. Further, in the following description of some embodiments, a detailed description of related known components and functions when considered to obscure the subject of the present disclosure will be omitted for the purpose of clarity and for brevity.

Additionally, various terms such as first, second, A, B, (a), (b), etc., are used solely to differentiate one component from the other but not to imply or suggest the substances, order, or sequence of the components. Throughout this specification, when a part "includes" or "comprises" a component, the part is meant to further include other components, not to exclude thereof unless specifically stated to the contrary. The terms such as "unit," "module," and the like refer to one or more units for processing at least one function or operation, which may be implemented by hardware, software, or a combination thereof.

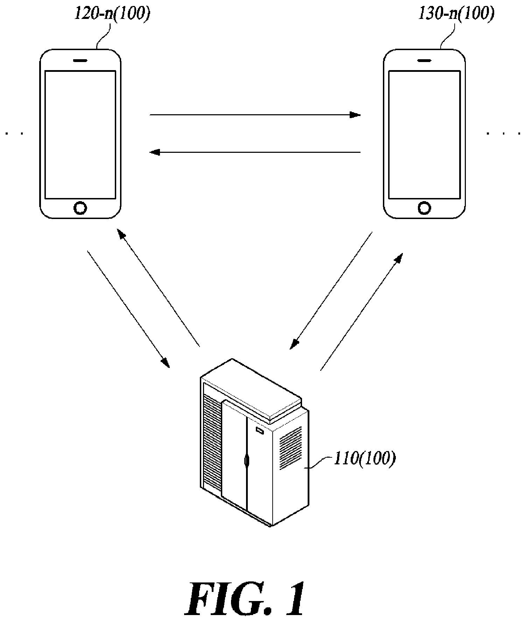

FIG. 1 is a diagram for describing a relationship between electronic devices 100 for generating a multi-depth image.

As represented in FIG. 1, terminals 120-n, 130-n, and a server 110 may be included for the electronic devices 100 to generate a multi-depth image through cooperation. The terminals 120-n and 130-n may cooperate to generate a multi-depth image or the terminals 120-n and 130-n may cooperate with the server 110 to generate a multi-depth image.

The server 110 may be formed as an online server that can perform wired/wireless communications with the outside. The terminals 120-n and 130-n may be implemented in various forms such as mobile, tablet PCs, PDAs, drones, and the like.

The terminals 120-n and 130-n may be divided into one or more requesting terminals or request devices 120-n and one or more responding terminals or response devices 130-n. The request device 120-n is a device that requests to insert another object into a target object. The response device 130-n is a device that obtains an object corresponding to the request, which is an object to be inserted. The target object may be the main image (target image) that becomes a mainstay of the multi-depth image or may be an object inserted in a tree structure in the target image.

Depending on implementations, the multi-depth image may be generated through cooperation between the request device 120-n and a drone that implements the response device 130-n. For example, when a requestor requests insertion to the drone through the request device 120-n, the drone may move to a place where a target to be inserted is located and obtain an object (image, etc.) of the target to be inserted. The drone may transmit the obtained object to the request device 120-n to induce the generation of a multi-depth image in the request device 120-n, or to perform a direct insertion of the obtained object to generate a multi-depth image.

A method of generating a multi-depth image may be largely composed of processes of 1) requesting to insert an object other than a target object into the target object, 2) obtaining the other requested object, and 3) inserting the obtained object into the target object.
1) The process of requesting to insert the other object into the target object may be performed in the request device 120-n. In response to a 'request' input requesting to insert the other object into the target object, the request device 120-n may transmit request information on the request to the server 110 or another terminal, i,e., the response device 130-n.

The request may be one for details of a target object. The request may be a text request for the detail of the target object, an image request for the detail, a video request for the detail, a voice request for the detail, and the like.

The request may be a request for directly requesting details of a target object (direct request), or it may be a request for supporting the direct request by another user (support request or supportive request). The supportive request refers to a request indicating the fact that a subject user's desired request corresponds content-wise to another user's request. The 'request' mentioned below may be any one of a direct request and a supportive request, or a request including both a direct request and a supportive request.

Since the requested object is obtained in response to a request, it may be referred to as a 'response object'. The response object may be implemented in various forms that can provide details about the target object, such as text, image, video, and voice corresponding to the request.

2) The process of obtaining a response object corresponding to the request may be performed by the response device 130-n. The response device 130-n may obtain a response object corresponding to the request by launching an application corresponding to the request. Where the request is a text request, an application capable of composing text may be launched. The request as being an image request may trigger a camera application capable of obtaining an image. The request as being a video request may trigger an application capable of obtaining a video. The request as being a voice request may trigger a recording application capable of obtaining a voice.

The application corresponding to the request may be selected or specified by the requestor or may be selected or specified by the responder.

In the requestor's case, the requestor may specify an application by using the request device 120-n possessed by the requester, and the request device 120-n may transmit the request information by including information specifying the application. In this case, the response device 130-n receiving the information on the request may automatically execute the (specified) application corresponding to the request to obtain a response object corresponding to the request.

In the responder's case, the responder may select a application corresponding to the response object from among application candidates installed in the response device 130-n possessed by the responder. For example, when selecting a request, the responder may select the application by rendering a list of application candidates installed in the response device 130-n to be displayed and designating any one of the displayed application candidates. Here, the responder may keep an operation (touch operation) of selecting a request within the screen of the response device 130-n while a list of application candidates is displayed, and the responder may move or drag the touch to any one of the displayed application candidates and thereby the particular application of choice.

3) The process of inserting the response object into the target object may be implemented in any one of the request device 120-n, the response device 130-n, and the server 110. In an embodiment where the request device 120-n performs the insertion of the response object, the latter is transmitted from the response device 130-n to the request device 130-n. In an embodiment where the server 110 performs the insertion of the response object, the latter is transmitted from the response device 130-n to the server 110.

Depending on embodiments, the responder may set restrictions on the request in advance before receiving a request to insert another object into the target object.

For example, the responder may designate or limit one or more target objects to be the target of the request among the objects inserted in the target image. As another example, the responder may predesignate or limit a specific part (a building, object, person, location, etc., represented in the target object) to be requested within the target object. As yet another example, the responder may limit the amount of time it will receive a request. As yet another example, the responder may designate or limit the target object based on the responder's moving path or the responder's current location.

Such a restriction may be provided in advance to the server 110 or the request device 120-n through the response device 130-n and used to induce a request corresponding to the request of the responder.

Depending on embodiments, the insertion of the response object may be implemented automatically or may be implemented according to the requestor's or responder's selection.

Where the requestor's or responder's selection makes the insertion, the requestor or the responder may determine whether the response object meets the request (made by the requester), and when it does, make the insertion of that response object. When the response object does not meet the request of the requester, the requestor may re-transmit information on the request or request a modification of the response object. When requesting a modification of a response object, the contents of the modification desired by the requester may be transmitted in tandem. When the response object does not meet the requester's request, the responder may launch the application to obtain a second response object.

When there is a multi-response, i.e., a plurality of response objects to one request, the requestor may select any one of the response objects included in the multi-response. The requester may select one response object that best meets the requester's request from among the response objects. The selected response object may be inserted into the target object at the request position.

The multi-depth image generation method provided by the present disclosure may be divided into an embodiment with an insertion made by the request device 120-n, another embodiment with the insertion made by the server 110, and yet another embodiment with the insertion made by the response device 130-n. Additionally, the multi-depth image generating method may be implemented in the form of a program (hereinafter, referred to as a 'generation program') recorded on a computer-readable recording medium.

### Embodiment 1

Embodiment 1 is a method of generating a multi-depth image, as implemented in the form of a program (generation program) recorded on a recording medium.

The generation program may be configured to include 1) a function of sharing a target image between the electronic devices 120-n, 130-n, and/or 110 (in Step S210), 2) a function of updating the target image for causing a request to be displayed on the target object (in Step S230), and 3) a function of generating a multi-depth image by inserting a response object at a position where the request is displayed on the target object (in Step S250).
1) The generation program may share the target image among the electronic devices 120-n, 130-n, and/or 110 (S210). This function means that the electronic device having the target image transmits the target image to another electronic device.

The electronic device transmitting the target image may be any one of the request device 120-n, the response device 130-n, and the server 110. The electronic device receiving the target image may be any one of the request device 120-n, the response device 130-n, and the server 110.

Through this function, electronic devices that cooperate to generate a multi-depth image may secure or share the same target image.

2) The generation program may update the target image to make the request displayed on the target object (S230). This function means a step for displaying the inputted request on the target object when information on the request (request information) is inputted from one or more of the electronic devices (S220).

The request information may include information specifying a target object and information on a position where a request is displayed within the target object. Since the target image including the target object has already been shared between the electronic devices, the response device 130-n in receipt of the request information may use the included information specifying the target object to identify the target object among multiple objects on the target image. Additionally, the response device 130-n in receipt of the request information may use the included information on the position where the request is displayed to confirm the requested position of the detail in the target object.

The function of updating the target image may further include functions of at least setting multiple requests into one multi-request, setting the priority of multi-requests, grouping the requests included in the multi-request by type, and displaying a shifting icon. A more detailed description will be provided below.

3) The generation program may generate a multi-depth image by inserting the response object at a position where the request is displayed on the target object (S250). This function means a final generation of a multi-depth image.

Specifically, in response to an input of a response object from one or more of the electronic devices (S240), the generation program may insert the response object at a position where the request is displayed on the target object to generate a multi-depth image (S250).

The request may be displayed within the target object or displayed around the target object. Here, displaying the request around the target object may signify requesting for 'page detailing'.

When the request is displayed within the target object, the generation program may generate a multi-depth image by inserting the response object at a lower depth thereof at the position where the request is displayed on the target object. When the request is displayed around the target object, the generation program may generate a page-detailed multi-depth image by linking or inserting the response object in the vicinity of the displayed request.

As described above, the function of updating the target image may be configured to include functions of at least 1) setting multiple requests into one multi-request, 2) setting the priority of multi-requests, 3) grouping the requests included in the multi-request by types, 4) displaying a shifting icon, and 5) providing an enlarged display of requests.

1) The generation program may determine whether multiple requests are positioned within a preset range of the target object (S310).

The multiple requests being positioned within the preset range of the target object may signify multiple requestors (multiple request devices) requesting details for the same specific part of the target object.

Accordingly, when multiple requests are positioned within the preset range of the target object, the generation program may set those requests into one request (multi-request) (S330). With the multiple requests set as one multi-request, the multiple requests can be displayed as a single request on the screen of the response device 130-n. After setting the multiple requests into one multi-request, the generation program may update the target image to make the multi-request displayed on the target object (S330).

The preset range is an area in which requests can be regarded as being equivalent, and it may be set by using, for example, a distance from any one of the multiple requests to another request. The preset range may be adjusted according to a history of setting multi-requests or a user's intention.

As described above, utilizing the multi-request can solve the difficulty of the target object being crowded with multiple requests displayed, which hinders the responder from accurately identifying the target object. Additionally, utilizing the multi-request allows distinguishing a multi-request from a customary request (request that is not set as a multi-request), to enable a more rapid response to a portion that has received a relatively large number of requests.

The generation program may skip the setting for multi-request without multiple requests being placed within a preset range but only one request therein and proceed to update the target image to make the request displayed on the target object (S330).

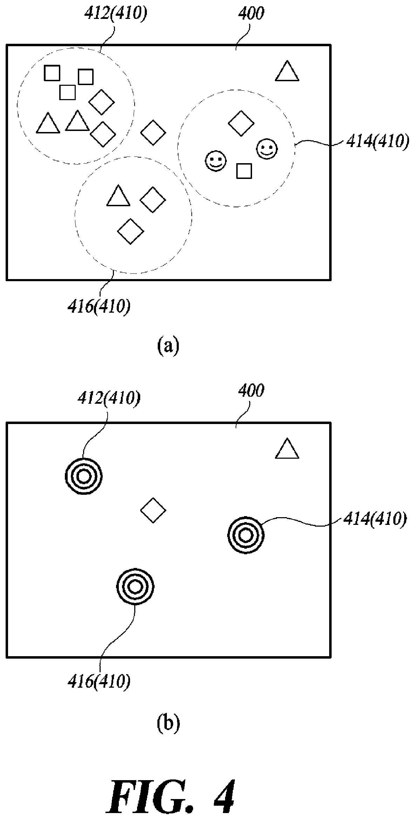

FIGS. 4 show an example method of setting a multi-request. In FIG. 4A, icons of various shapes displayed in a target object 400 indicate requests, and dotted circles indicate preset ranges 410.

A total of seven requests are displayed in a preset range 412 located at the upper left of the target object 400, a total of four requests are displayed in a preset range 414 located on the right side of the target object 400, and a total of three requests are displayed in a preset range 416 located at the lower left of the target object 400.

Since multiple requests are located in the preset ranges 412, 414, and 416, the requests included in each of the preset ranges 412, 414, and 416 may be set as a single multi-request (FIG. 4B).

FIG. 4B shows an example display of multi-requests at 412, 414, and 416 in the form of icons shaped distinctly from customary requests, but the multi-requests 412, 414, and 416 may be displayed by numbers, colors distinct from the ordinary requests, changing colors, and others besides the icons. In short, the multi-requests 412, 414, and 416 may be displayed in various shapes or colors to be distinguished from the customary requests.

2) Multiple multi-requests may be set in the target object. For example, when there are multiple requests for each of multiple specific parts in the target object, the generation program may set the multiple multi-requests.

Such a case needs a method of setting a processing priority for multiple multi-requests. Here, the priority refers to information for inducing a processing order for the multi-requests by informing a multi-request that needs to be processed first among the multi-requests.

The generation program may set the priority of the multi-requests based on the number of requests set as each of the multi-requests, that is, the numbers of requests included in the multi-requests (S322). Here, the requests set as multi-requests may consist of direct requests exclusively or may include both direct requests and supportive requests.

When the priority is set, the generation program may display the priority of the multi-requests on the screen of the response device 130-n based on the set priority. Priorities between multi-requests may be displayed by using different icons. Additionally, the priority between multi-requests may be displayed by using a number, e.g, a number indicating the relative order between the multi-requests or the number of requests included in the multi-request, colors distinct from other multi-requests, changing colors, and others. In short, the priorities among the multi-requests may be displayed by using various distinguishable shapes or colors.

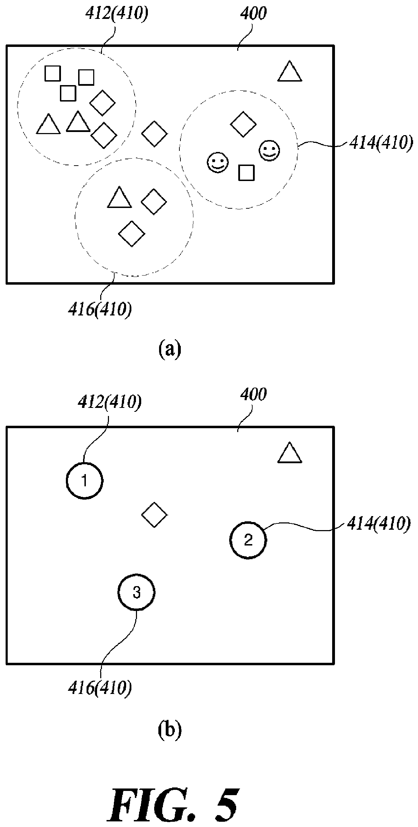

FIGS. 5A and 5B show an example method of setting priorities between multi-requests. In FIG. 5A, a total of seven requests are displayed in a preset range 412 located in the upper left of the target object 400, so those requests may be set as a single multi-request 412. Additionally, a total of four requests are displayed in a preset range 414 located on the right side of the target object 400, so the same requests may be set as a single multi-request 414. Furthermore, a total of three requests are displayed in a preset range 416 located in the lower left of the target object 400, so the same requests may be set as a single multi-request 416.

When setting the priority of the multi-requests 412, 414, and 416 based on the numbers of set requests, the highest priority may be set to the upper left multi-request 412, the next highest priority may be set to the right side multi-request 414, and the lowest priority may be set to the lower-left multi-request 416.

When displaying the priorities of the multi-requests 412, 414, and 416 by numbers, the priority of the upper left multi-request 412 may be displayed as "1," the priority of the right side multi-request 414 may be displayed as "2," and the priority of the lower-left multi-request 416 may be displayed as "3" as shown in FIG. 5B.

3) Even when included in the same multi-request 410, requests may have different types of requested details. For example, even when directed to the same specific part within the target object, detailed requests may be different from each other in terms of type, such as text, video, or image. In this case, it is preferable to provide a response conforming to each of types of the requests included in the multi-request 410.

To this end, the generation program may set, into one group, the requests corresponding to the same type among the requests set as the multi-request 410 (S322). To determine whether requests share the same type, the request information received from the request device 120-n may further include information specifying the type of the request, that is, the type of the 'requested object for insertion'.

In such a case, a response object may be obtained for each of the groups in the multi-request 410. For example, where a particular group is a text detail request, a text-type response object may be obtained, where another group is a video detail request, a video-type response object may be obtained, and where yet another group is an image detail request, an image-type response object may be obtained.

When a response object for each of the groups is inputted from one or more of the electronic devices, the generation program may insert a response object corresponding to each of the groups in the position of each of the groups in the target object and thereby generate a multi-depth image.

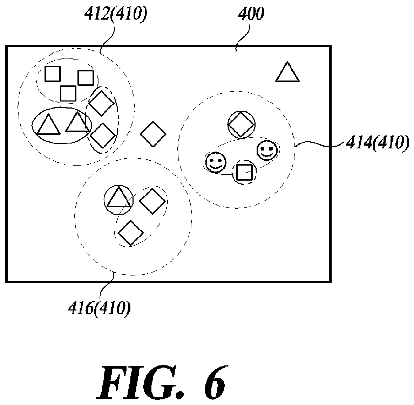

FIG. 6 shows an example method of setting groups of requests included in the multi-requests 410. Among the icons of various shapes displayed on the target object 400, icons having the same shape represent the same type of requests.

A total of seven requests are included in an upper left multi-request 412. Three (square icon), two (triangular icon), and two (rotated-square icon) of the requests each represent the same type of requests, so each type may be set as a single group.

A total of four requests are included in a right-side multi-request 414. Two (human face icon), one (rotated-square icon), and one (square icon) of the requests each represent the same type of request(s), so each type may be set as a single group.

A total of three requests are included in a lower left multi-request 416. Two (rotated-square icon) and one (triangular icon) of the requests each represent the same type of request(s), so each type may be set as a single group.

4) Meanwhile when the target object with requests displayed is one inserted in the target image at a lower depth, the responder when identifying the requests needs to go through depths one by one from the target image or the first displayed object on the screen to get to the target object.

The present disclosure resolves the above inconvenience by displaying a shifting icon that is an icon capable of providing a straight shift from the target image or the first displayed object (initial object) on the screen to the target object.

To this end, when request information is inputted, the generation program may update the target image to make the shifting icon displayed. Here, the object on which the shifting icon is displayed may be the first displayed image on the response device 130-n or a target image (main image).

Having checked the target image updated to display the shifting icon, a responder may select the shifting icon to check the request by going straight from the first displayed object to the target object. The shifting icon may be modified into a bookmark or a shortcut.

Meanwhile, the shifting icon may be used to perform a function of guiding a shifting path from the initial object to the target object.

When there are multiple low-order objects inserted into the initial object, the responder needs to use the method of searching all of the multiple low-order objects to search in person for the target object into which the request is inserted from among the multiple low-order objects.

To solve this inconvenience, the shifting icon may be displayed only at the position of the low-order object that has a target object at the lower depth thereof among the low-order objects inserted into the initial object. As another example, the shifting icon may be displayed on all (low-order) objects existing on the path from the initial object to the target object.

5) The generation program may provide an enlarged display of the requests set as multi-requests.

Even when multiple requests are set as one multi-request based on whether they are located within a preset range, those requests may request details of different targets or places. The generation program may provide a function of enlarging and displaying requests set as multi-requests to more accurately distinguish requests for different targets or places.

When the responder selects a multi-request to more accurately determine the contents of the multi-request or when information for selecting a multi-request is inputted from one or more electronic devices, the requests included in the multi-request may be displayed enlarged. With the enlarged display of the requests, the distance between the requests increases proportionally, enabling a more accurate determination of the positions where the respective requests are displayed.

### Embodiment 2

Embodiment 2 is a method performed by an electronic device for generating a multi-depth image. Embodiment 2 may be divided into sub-embodiments according to which one among the electronic devices 100 performs 'generating a multi-depth image by inserting a response object into a target object'.

### Embodiment 2-1

Embodiment 2-1 is a method performed by an electronic device 120 for 'generating a multi-depth image by inserting a response object into a target object'.

This embodiment may be performed when the requester requests the desired object from other people while generating a multi-depth image and receives a response to the request from other people. Here, the other people who respond may be responders who hold a response device 130-n and are or are going to be at a place where they can obtain the desired object.

When a request is inputted to the request device 120 (S710), the request device 120 may transmit the request information to one or more response devices 130-n (S720). The target image may be updated to display the request on the target object. Upon receiving the request information, the response device 130-n may execute an application corresponding to the request to obtain a response object corresponding to the request (S730).

Information items contained in the request information may vary depending on whether the target image is shared with the response device 130-n.

Where the target image is shared with the response device 130-n, the request information may include information specifying the target object from among the objects inserted in a tree structure in the target image. The responder may use the information specifying the target object to determine which object is the target object among the objects inserted in the tree structure in the target image.

Where the target image is not shared with the response device 130-n, the request information may include a target object in which a request is displayed (position where the request is displayed). The responder may check the target object included in the request information to determine the object for which details are requested. In this case, for the responder to more accurately identify the target object, the embodiment may further include a high-order object that is an object inserted into an upper depth of the target object and/or a low-order object that is an object inserted into a lower depth of the target object. Depending on implementations, a target image including a target object may be included in the request information which is then transmitted to the response device 130-n.

The response device 130-n may transmit the obtained response object to the request device 120 (S740), and the request device 120 may receive the response object. Additionally, the request device 120 may generate a multi-depth image by inserting the received response object at the position of the request on the target object (S750). Here, the inserting of the received response object includes both the case of inserting the response object at a lower depth of the target object and the case of inserting the response object in the form of page detailing.

Meanwhile, where there is a plurality of response devices 130-n, multiple response objects may be received. In this case, the request device 120 may set the multiple response objects into a single multi-response based on whether the multiple response objects are located within a preset range within the target object.

The preset range is an area wherein multiple response objects may be regarded as the same response, and it may be set by using, among others, distances from any one of the multiple response objects to other response objects. The preset range may be changed according to factors including a past history of processing the same response or a user's intention.

As described above, additional use of a multi-response for the benefit of consolidating multiple responses into one response facilitates the requestor's easy identification of the response. Moreover, the additional use of the multi-response enables the requestor to distinguish a multi-response from a customary response (a response that is not set as a multi-response), allowing the requestor to more quickly determine a portion that has received a relatively large number of responses.

The requestor may select any one of the response objects included in the multi-response. The requester may select one response object that best meets the request of the requester from among the response objects. The selected response object may be inserted into the request position of the target object.

Depending on implementations, none of the response objects included in the multi-response may satisfy the request of the requester. In this case, the requestor may retransmit the request information or request modification of the response object. When requesting modification of a response object, the contents of the modification desired by the requester may be transmitted in tandem.

Meanwhile, multiple multi-responses may exist in the target object. For example, when a requestor sets multiple requests for one target object or when a single request requests multiple responses, multiple multi-responses may be set.

Such a case needs a method of setting a processing priority among the multiple multi-responses. Here, the priority refers to information for inducing a processing order of the multi-responses by informing the multi-response that needs to be processed first among the multi-responses.

Multi-responses may be prioritized based on the number of responses (response objects) included in each of the multi-responses. The priorities between multi-responses may be displayed by using different icons, or numbers representing the relative ranks between multi-requests or the numbers of requests included in the multi-requests, colors that are distinguished from other multi-responses, or color changes. FIG. 5, which illustrate an example method of setting priorities between multi-requests, may be an example of setting priorities between multi-responses.

Meanwhile, when a single request requests multiple responses, even such response objects as included in the same multi-response may have different types. For example, a single request may request multiple responses among a text response, a video response, an image response, and an audio response, wherein response objects included in one multi-response can have different types. In such a case, it is preferable to classify the types of response objects included in the multi-response before providing the response objects to the requester.

To this end, among the response objects set as a single multi-response, response objects corresponding to the common types may be set as unitary groups, respectively. FIG. 6, which is an example method of setting groups of requests included in the multi-request 410, may be an example of setting groups of response objects included in the multi-response.

In this case, the insertion of the response object may be performed by groups. For example, response objects included in a single multi-response may be inserted for each group into a target object. Any one of the response objects classified into the same type may be inserted into the target object.

### Embodiment 2-2

Embodiment 2-2 is a method performed by the response device 130 for 'generating a multi-depth image by inserting a response object into a target object'.

This embodiment may be performed when the requestor requests, while generating the multi-depth image, a desired object to the responders, and receives, from the responders, the multi-depth image inserted with the response to the request.

When a request is inputted to one or more request devices 120-n (S810), the request device 120-n may transmit request information to a response device 130 (S820). Upon receiving the request information, the response device 130 may execute an application corresponding to the request (S830) to obtain a response object corresponding to the request (S840).

An application corresponding to the request may be specified by a method performed by a responder who has confirmed the request for selecting the relevant application. Depending on implementations, the application corresponding to the request may be automatically specified or executed. To this end, the request information may include information specifying an application corresponding to the request.

Meanwhile, depending on whether the target image is shared with the response device 130, information items included in the request information may vary.

Where the target image is shared with the response device 130, the request information may include information specifying the target object from among the objects inserted in a tree structure in the target image. The responder may use the information specifying the target object to determine which object is the target object among the objects inserted in the tree structure in the target image.

Where the target image is not shared with the response device 130-n, the request information may include a target object with a request displayed. The responder can determine the object for which details are requested by checking the target object included in the request information. In this case, for the responder to more accurately identify the target object, the embodiment may further include a high-order object that is an object inserted into an upper depth of the target object and/or a low-order object that is an object inserted into a lower depth of the target object.

The response device 130 may generate a multi-depth image by inserting the obtained response object at the position of the request in the target object (S850). Additionally, the response device 130 may transmit the generated multi-depth image to the request device 130-n (S860). Here, the inserting of the response object includes both the case of inserting the response object at a lower depth than the target object and the case of inserting the response object in the form of page detailing.

The response device 130 may perform priority setting of multi-requests, a grouping of requests included in multi-requests by types, display of a shifting icon, enlarged display of requests set as multi-requests, and the like. Specific details of the multi-request setting, the priority setting of the multi-requests, the grouping of requests, the display of a shifting icon, and the enlarged display of the requests may be the same as those described in embodiment 1.

### Embodiment 2-3

Embodiment 2-3 is a method performed by a server 110 for 'generating a multi-depth image by inserting a response object into a target object'.

This embodiment may be performed when the requestor requests, while generating the multi-depth image, a desired object to the server 110, the responders who get the request provide a response that is relevant to the request to the server 110, the server 110 generates the multi-depth image by inserting the response, and then the requestor confirms the multi-depth image generated.

When a request is inputted to a request device 120-n (S910), the request device 120-n may transmit request information to the server 110 (S920). The server 110 may alert the response device 130-n of the request information in receipt (S930).

The response device 130-n may access the server 110 and check information about the request (S940). Additionally, the response device 130-n may execute an application corresponding to the request to obtain a response object corresponding to the request (S950). A method for selecting an application may be the same as the method described above.

The response device 130-n may transmit the obtained response object to the server 110 (S960). The server 110 may generate a multi-depth image by inserting the received response object at the position of the request in the target object (S970). Here, the inserting of the response object includes both the case of inserting the response object at a lower depth than the target object and the case of inserting the response object in the form of page detailing.

When the multi-depth image is generated, the server 110 may alert the request device 120-n of generation of the multi-depth image or reception of the response object (S980). Alerted by the alarm, the request device 120-n may access the server 110 and confirm the response object or the multi-depth image (S990).

Meanwhile, when there is a plurality of request devices 120-n, multiple request information items may be received. In this case, the server 110 may set the multiple requests into a single multi-request based on whether the multiple requests are positioned within a preset range within the target object. Additionally, the server 110 may perform priority setting of multi-requests, a grouping of requests included in multi-requests by types, display of a shifting icon, enlarged display of requests set as multi-requests, and the like. Particulars of the multi-request setting, the priority setting of the multi-requests, the grouping of the requests, the display of the shifting icon, and the enlarged display of the requests may be the same as those described in embodiment 1.

Meanwhile, when there is a plurality of response devices 130-n, multiple response objects may be received. In this case, the server 110 may set the multiple response objects into one of unitary multi-responses based on whether the multiple response objects are located within a preset range within the target object. Particulars of the multi-response setting may be the same as those described in Embodiment 2-1.

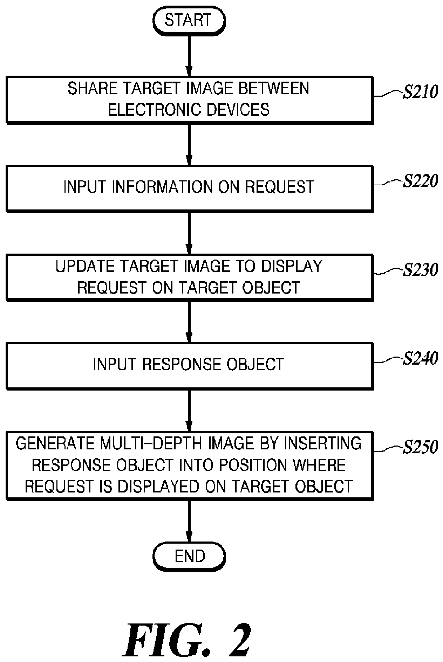

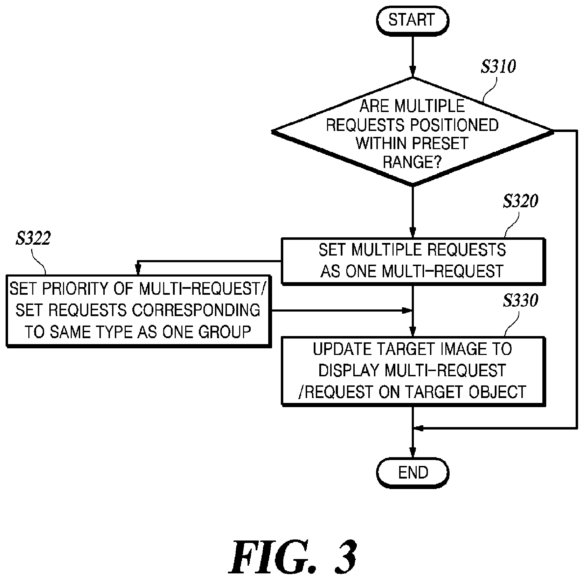

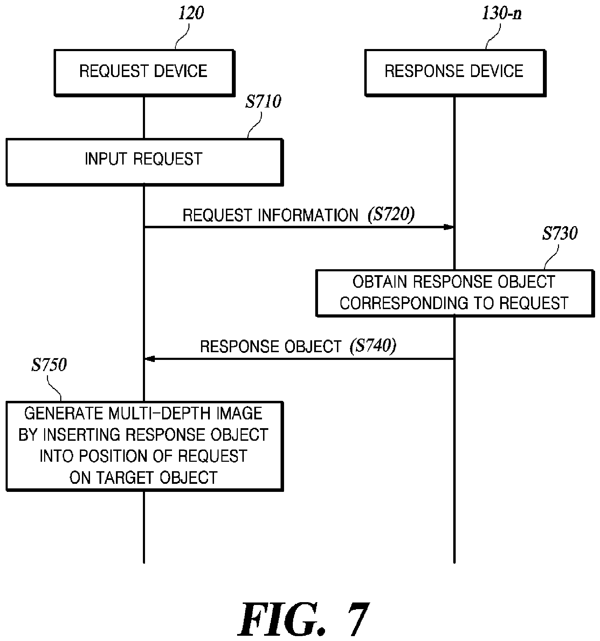

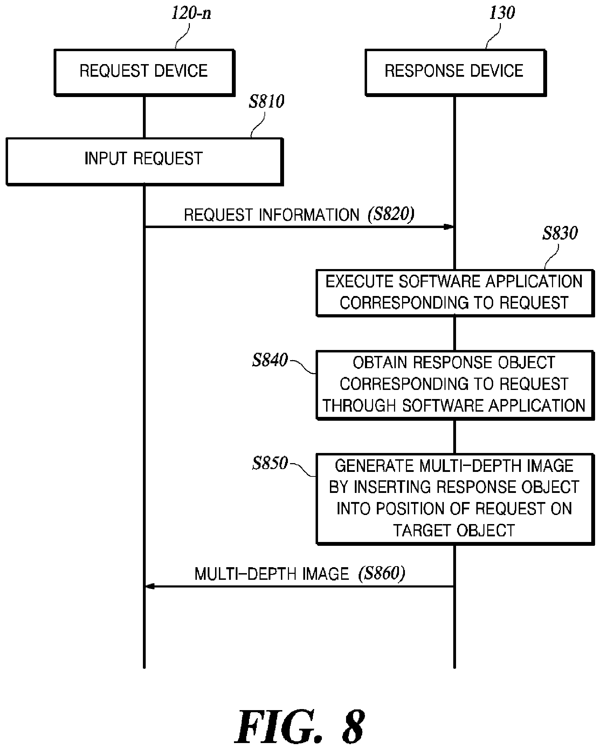

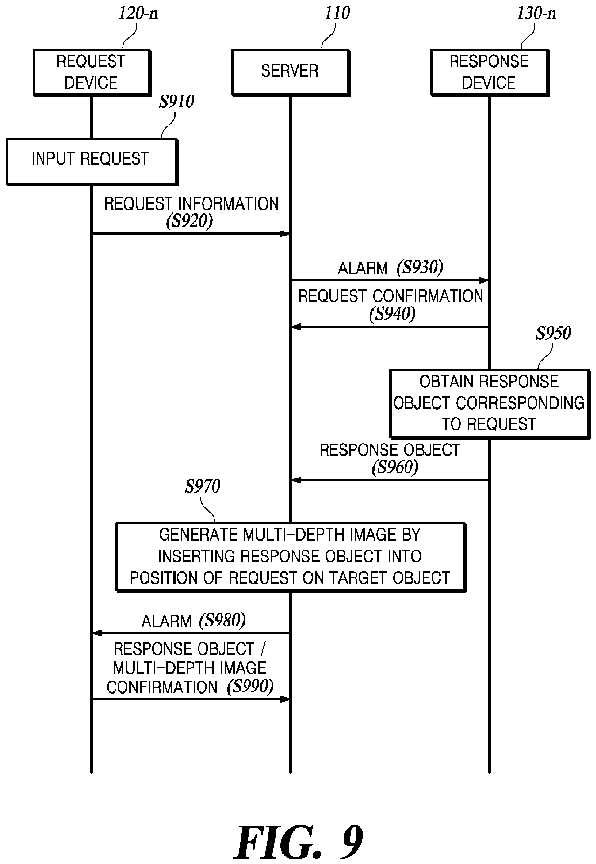

Although FIGS. 2, 3, and 7-9 present the respective steps thereof as being sequentially performed, they merely instantiate the technical idea of some embodiments of the present disclosure. Therefore, a person having ordinary skill in the pertinent art could incorporate various modifications, additions, and substitutions in practicing the present disclosure without departing from the very nature of some embodiments by changing the sequence of steps illustrated by FIGS. 2, 3, and 7-9 or by performing one or more of the steps thereof in parallel, and hence the steps in FIGS. 2, 3, and 7-9 are not limited to the illustrated chronological sequences.

The steps illustrated in FIGS. 2, 3, and 7-9 can be implemented as computer-readable codes on a computer-readable recording medium. The computer-readable recording medium includes any type of recording device on which data that can be read by a computer system are recordable. Examples of the computer-readable recording medium include non-transitory medium such as a ROM, a RAM, a CD-ROM, a magnetic tape, a floppy disk, and an optical data storage and transitory medium such as a carrier wave (e.g., transmission through the Internet), and data transmission medium. Further, the computer-readable recording medium can be distributed in computer systems connected via a network, wherein the computer-readable codes can be stored and executed in a distributed mode.

Although exemplary embodiments of the present disclosure have been described for illustrative purposes, those skilled in the art will appreciate that various modifications, additions, and substitutions are possible, without departing from the idea and scope of the claimed invention. Therefore, exemplary embodiments of the present disclosure have been described for the sake of brevity and clarity. The scope of the technical idea of the embodiments of the present disclosure is not limited by the illustrations. Accordingly, one of ordinary skill would understand the scope of the claimed invention is not to be limited by the above explicitly described embodiments but by the claims and equivalents thereof.

### CROSS-REFERENCE TO RELATED APPLICATION

This application claims priority from Korean Patent Application No. 10-2019-0155335 filed on November 28, 2019, the disclosure of which is incorporated by reference herein in its entirety.

## Claims

1. A computer-readable medium having stored thereon a program for generating a multi-depth image in which one or more objects are inserted in a tree structure in a main image through cooperation between electronic devices, the program, when executed, performs the functions of:
sharing a target image among the electronic devices;
when information on a request for inserting another object into a target object is inputted from one or more of the electronic devices, updating the target image to make the request displayed on the target object; and
when a response object corresponding to the request is inputted from one or more of the electronic devices, generating the multi-depth image by inserting the response object at a position where the request is displayed on the target object,
wherein the target object is the target image or an object inserted in a tree structure in the target image.

2. The computer-readable medium of claim 1, wherein the response object is inserted at a lower depth in the target object at a position where the request is displayed.

3. The computer-readable medium of claim 1, wherein the information on the request comprises:
information that specifies an application configured to obtain the response object to cause the application to be automatically executed.

4. The computer-readable medium of claim 1, configured to perform functions comprising:
expressing one or more application candidates when the request is selected; and
obtaining the response object by using one of expressed application candidates.

5. The computer-readable medium of claim 1, wherein the information on the request comprises:
information that specifies the target object among objects inserted in the tree structure in the target image; and
the position where the request is displayed on the target object.

6. The computer-readable medium of claim 1, wherein the updating of the target image comprises:
when a plurality of the requests are positioned within a preset range of the target object, setting the requests as a multi-request; and
updating the target image to make the multi-request displayed on the target object.

7. The computer-readable medium of claim 6, wherein the setting of the requests as the multi-request comprises:
further setting a priority of the multi-request according to a number of the requests set as the multi-request.

8. The computer-readable medium of claim 6, wherein the information on the request comprises:
information that specifies a type of the another object requested to be inserted into the target object,
wherein the setting of the requests as multi-request comprises:
setting, among the requests set as the multi-request, requests that correspond to a common type as one of groups, and
wherein the generating of the multi-depth image comprises:
when a response object corresponding to the each of the groups is inputted from one or more of the electronic devices, generating the multi-depth image by inserting the response object at a position where the one of the groups is present on the target object.

9. The computer-readable medium of claim 6, further configured to perform functions comprising:
providing an enlarged display of the requests set as the multi-request when the multi-request is selected.

10. The computer-readable medium of claim 1, wherein the updating of the target image comprises:
when the information on the request is inputted, updating the target image to make a shifting icon displayed for providing a shift to the target object from one of objects inserted in the tree structure in the target image.

11. A method of generating a multi-depth image in which one or more objects are inserted in a tree structure in a main image through cooperation between electronic devices, the method comprising:
when a request for inserting another object into a target object is inputted, updating a target image to make the request displayed on the target object;
transmitting, to one or more response devices, request information including the target object and a position where the request is displayed on the target object; and
when a response object corresponding to the request is inputted from the response devices, generating the multi-depth image by inserting the response object at a position where the request is displayed on the target object,
wherein the target object is the target image or an object inserted in a tree structure in the target image.

12. The method of claim 11, wherein the response object is inserted at a lower depth in the target object at a position where the request is displayed.

13. The method of claim 11, wherein the information on the request further comprises:
information that specifies an application configured to obtain the response object to cause the application to be automatically executed.

14. The method of claim 11, further comprising:
when a plurality of response objects are positioned within a preset range of the target object, setting the response objects as multi-response.

15. The method of claim 11, wherein the updating of the target image com prises:
when the request is inputted, updating the target image to make a shifting icon displayed for providing a shift to the target object from one of objects inserted in the tree structure in the target image.
